# EUROPÄISCHE PATENTSCHRIFT

(11) **EP 3 607 351 B1**
(45) Veröffentlichungstag und Bekanntmachung des Hinweises auf die Patenterteilung: **11.08.2021**
(21) Anmeldenummer: 18713909.2
(22) Anmeldetag: 27.03.2018
(51) Int. Cl.: G01S 17/42, G02B 19/00, G01S 7/486

(54) **LICHTTRANSMISSIONSELEMENT, OPTISCHE EMPFANGSEINHEIT, OPTISCHE AKTOREINHEIT, LIDAR-SYSTEM, ARBEITSVORRICHTUNG UND FAHRZEUG**
LIGHT TRANSMISSION ELEMENT, OPTICAL RECEIVING UNIT, OPTICAL ACTUATOR UNIT, LIDAR SYSTEM, WORKING DEVICE, AND VEHICLE
ÉLÉMENT DE TRANSMISSION DE LA LUMIÈRE, UNITÉ DE RÉCEPTION OPTIQUE, UNITÉ D'ACTIONNEMENT OPTIQUE, SYSTÈME LIDAR, DISPOSITIF DE TRAVAIL ET VÉHICULE

(30) Priorität: 06.04.2017 DE 102017205844
(43) Veröffentlichungstag der Anmeldung: 12.02.2020
(73) Patentinhaber: Robert Bosch GmbH, 70442 Stuttgart (DE)
(72) Erfinder: KAMIL, Mustafa, 71229 Leonberg (DE); HOLLECZEK, Annemarie, 4701-970 Braga (PT)
(86) Internationale Anmeldenummer: PCT/EP2018/057787
(87) Internationale Veröffentlichungsnummer: WO 2018/184918

(56) Entgegenhaltungen:
- EP-A1- 3 045 936
- JP-A- 2004 012 918
- US-A1- 2010 090 595

## Beschreibung

### Stand der Technik

Die vorliegende Erfindung betrifft ein Lichttransmissionselement für eine optische Einheit, eine optische Empfangs- oder Aktoreinheit, ein LiDAR-System sowie eine Arbeitsvorrichtung und insbesondere ein Fahrzeug.

Bei vielen technischen Anwendungen werden bei optischen Empfangseinheiten oder auch bei Emittern, im optischen Pfad vorgeschaltet, Wellenlängenfilter eingesetzt, um das zu empfangene oder zu emittierende Spektrum zu begrenzen. Dabei ist bekannt, dass derartige Wellenlängenfilter häufig ein vom tatsächlichen Einfallswinkel der Strahlung abhängiges Transmissionsfenster im Hinblick auf Position und Breite des Fensters im Spektrum aufweisen. Im Umkehrschluss bedeutet dies, dass unter ungünstigen Umständen, d.h. bei großen Einfallswinkeln im Vergleich zum Einfallslot, die Filtereigenschaften von den Sollwerten abweichen können. Auch bei anderen optischen Anwendungen führen im Verhältnis zum Einfallslot große Einfallswinkel zu einem nicht gewünschten Verhalten der optischen Gesamtanordnung. Andererseits sind große Einfallswinkel im Hinblick auf ein hohes Maß an Lichtausbeute wünschenswert. Beide Aspekte miteinander in Einklang zu bringen stellt eine große technische Herausforderung dar und es bedarf bisher vergleichsweise komplexer optischer Systeme, um diesen Herausforderungen zu entsprechen.

Aus der JP 2004 012918 A ist ein Lichttransmissionselement für eine optische Einheit zur Transmission und dabei Winkelanpassung transmittierten Lichts bekannt, welches nach Art einer Schicht angeordnet eine Abfolge einer Mehrzahl optischer Elemente aufweist und bei welchem die Schicht eine erste Seite und eine zweite Seite bildet, die voneinander abgewandt sind.

Weiteren Stand der Technik bilden die Lehren der EP 3 045 936 A1 und der US 2010/090595 A1.

### Offenbarung der Erfindung

Das erfindungsgemäße Lichttransmissionselement mit den Merkmalen des Anspruchs 1 weist den Vorteil auf, dass in einem Strahlengang eine optischen Anordnung mit einfachen Mitteln und besonders verlustfrei eine Winkelanpassung transmittierten Lichts oder von elektromagnetischer Strahlung im Allgemeinen erzielt werden kann. Dies wird erfindungsgemäß mit den Merkmalen des Anspruchs 1 dadurch erreicht, dass ein Lichttransmissionselement geschaffen wir, und zwar für eine optische Einheit oder einer optischen Einheit und insbesondere für eine optische Empfangseinheit oder für eine optische Emissions- oder Aktoreinheit zur Transmission und dabei Winkelanpassung transmittierter elektromagnetischer Strahlung und insbesondere von Licht und/oder Infrarotstrahlung. Das Lichttransmissionselement ist nach Art einer Schicht ausgebildet und angeordnet und weist eine Abfolge einer Mehrzahl optischer Elemente auf. Die Schicht weist eine erste Seite oder Oberseite und eine zweite Seite oder Unterseite auf oder bildet diese, welche voneinander abgewandt und insbesondere einem ersten Halbraum bzw. einem zweiten Halbraum zugewandt sind. Ein jeweiliges optisches Element weist ein Paar sich jeweils von einer geometrisch im Wesentlichen gleichen oder identischen Basis verjüngend erstreckender Teilelemente auf, welche mit ihren Basen einander zugewandt sind und insbesondere aneinander angrenzen und entlang ihrer Verjüngung sich mit unterschiedlicher Länge erstrecken. Dabei sind die optischen Elemente so ausgerichtet, dass Teilelemente mit größerer Länge der ersten Seite oder Oberseite und Teilelemente mit geringerer Länge der zweiten Seite oder Unterseite zugewandt sind. Durch die erfindungsgemäß vorgesehenen Maßnahmen wird für alle Einfallsstrahlen, die im Vergleich zum Einfallslot einen bestimmten Winkel überschreiten, durch eine Mehrfachreflexion an benachbarten optischen Elementen eine Winkelanpassung eines transmittierten Strahls im Vergleich zum Einfallsstrahl erreicht.

Dies bedeutet, dass für von der ersten Seite besonders flach einfallende Strahlen eine Transmission weiter zum Lot der zu Grunde liegenden optischen Fläche hin erreicht wird. Dieser Fall ist für Empfängeranordnungen und dergleichen von Relevanz. Umgekehrt bedeutet dies, dass von der zweiten Seite einfallende Strahlen gegebenenfalls im Vergleich zum Einfallswinkel mit einem größeren Winkel zum Lot der zu Grunde liegenden optischen Fläche transmittiert werden können. Diese Situation ist für Emitteranordnungen von Relevanz, bei welchen eine strahlauffächernde oder stärkere Verteilung der Strahlung gewünscht wird.

Ein Aspekt der vorliegenden Erfindung kann mit anderen Worten darin gesehen werden, dass eine Mottenaugenstruktur mit einer gitterartig angeordneten Mehrzahl optischer Elemente ausgebildet wird, die konisch oder verjüngend verlaufen mit ihren konischen oder verjüngten Bereichen voneinander wegweisen und zueinander parallel ausgerichtet sind.

Die Unteransprüche zeigen bevorzugte Weiterbildungen der Erfindung.

Für die Ausgestaltungsformen der Schicht mit der Abfolge der optischer Elemente bieten sich unterschiedliche Möglichkeiten an, die auch je nach Anwendung in vorteilhafter Weise gewählt werden können.

Bei einer bevorzugten Ausführungsform des erfindungsgemäßen Lichttransmissionselements ist die Schicht mit der Abfolge optischer Elemente nach Art einer Monoschicht oder Monolage optischer Elemente ausgebildet. Das bedeutet konkret, dass die optischen Elemente nicht in mehreren Lagen übereinander liegen.

Alternativ sind jedoch auch mehrlagige Schichten denkbar.

Auch können die Form des Lichttransmissionselements und insbesondere die Form der Schicht der optischen Elemente geometrisch an die Erfordernisse der jeweiligen Anwendung angepasst werden.

Besonders einfache Verhältnisse stellen sich jedoch ein, wenn die Schicht in einer Fläche oder Ebene und insbesondere planar ausgebildet ist.

Die optischen Elemente selbst und insbesondere die jeweiligen Teilelemente können verschiedenartige geometrische Ausgestaltungen besitzen und in unterschiedlicher Art und Weise miteinander kombiniert werden.

So können die optischen Elemente und insbesondere die Teilelemente unter sich geometrisch und/oder materiell identisch zueinander ausgebildet sein.

Bei einer anderen zusätzlichen oder alternativen Ausgestaltungsform des erfindungsgemäßen Lichttransmissionselements können die optischen Elemente nach Art eines Doppelkonus und/oder einer Doppelpyramide ausgebildet sein.

Dies lässt sich insbesondere erreichen, wenn die Teilelemente jeweils als, insbesondere senkrechter, Konus oder Konusstumpf und/oder als, insbesondere senkrechte, Pyramide oder Pyramidenstumpf ausgebildet sind.

Auch in materieller Hinsicht bieten sich unterschiedliche Ausgestaltungsformen des erfindungsgemäßen Lichttransmissionselements an.

Besonders einfache Verhältnisse stellen sich ein, wenn die optischen Elemente einteilig oder materialeinstückig ausgebildet sind.

Obwohl viele Materialien intrinsisch ein hohes Reflexionsvermögen besitzen, können die optischen Eigenschaften der einzelnen optischen Elemente durch entsprechende materielle Ausgestaltungen weiter verbessert werden. Es bieten sich als Materialien beispielsweise PC, PMMA, Zeonex oder transmittierende Kunststoffmaterialien im Allgemeinen an.

So ist es bei einer anderen vorteilhaften Weiterbildung des erfindungsgemäßen Lichttransmissionselements vorgesehen, dass die optischen Elemente und insbesondere die Teilelemente einen Mantel aufweisen, dessen Fläche reflektierend ausgebildet ist, insbesondere über eine reflektierende Schicht oder Beschichtung.

Ein optisch besonders vorteilhaftes optisches Verhalten des erfindungsgemäßen Lichttransmissionselements stellt sich dann ein, wenn die optischen Elemente und insbesondere die Teilelemente zumindest lokal oder insgesamt zueinander gleich, insbesondere lokal oder insgesamt senkrecht zur ersten Seite und/oder zur zweiten Seite, und/oder zueinander parallel orientiert ausgerichtet sind, insbesondere in Relation zu ihren Körperachsen.

Alternativ oder zusätzlich dazu kann auch die übergeordnete Anordnung der Mehrzahl optischer Elemente innerhalb der Schicht entsprechend ausgestaltet sein, um die optischen Eigenschaften des Lichttransmissionselements vorteilhaft zu gestalten.

So ist es denkbar, dass die optischen Elemente in der Schicht nach Art eines, insbesondere senkrechten, Gitters angeordnet sind oder werden.

Alternativ dazu ist eine Anordnung denkbar, bei welcher die optischen Elemente in der Schicht nach Art eines, insbesondere senkrechten, Gitters und zusätzlich nach Art eines dazu dualen Gitters, zum Beispiel in Form einer dichtesten Packung, angeordnet sind oder werden.

Wie oben bereits erwähnt wurde ist dabei auch eine Anordnung im Bulk, zum Beispiel eine mehrschichtige Anordnung denkbar.

Eine besonders einfache Struktur ergibt sich jedoch dann, wenn die optischen Elemente zweidimensional angeordnet sind. Die Anordnung als Monolage oder Monoschicht wurde oben bereits erwähnt.

Die vorliegende Erfindung betrifft des Weiteren eine optische Empfangseinheit, insbesondere ein Filter und/oder einen Sensor, welcher oder welche ein erfindungsgemäßes Lichttransmissionselement aufweist bzw. aufweisen.

Dabei kann ein Lichteingangsbereich der optischen Empfangseinheit gebildet sein oder werden von der ersten Seite des Grunde liegenden Lichttransmissionselements.

Zusätzlich oder alternativ kann ein Lichtausgangsbereich der optischen Empfangseinheit gebildet sein oder werden von der zweiten Seite des Lichttransmissionselements.

Ferner ist Gegenstand der vorliegenden Erfindung auch eine optische Aktoreinheit und insbesondere ein Emitter für elektromagnetische Strahlung, welche bzw. welcher ein Lichttransmissionselement gemäß der vorliegenden Erfindung aufweist oder aufweisen.

In vorteilhafter Weise kann dort ein Lichteingangsbereich gebildet sein oder werden von der zweiten Seite des zu Grunde liegenden Lichttransmissionselements. Zusätzlich oder alternativ kann ein Lichtausgangsbereich gebildet sein oder werden von der ersten Seite des Grunde liegenden Lichttransmissionselements.

Ferner wird gemäß einem anderen Aspekt der vorliegenden Erfindung auch ein LiDAR-System geschaffen, welches mit einer Senderoptik zum Aussenden von Licht in ein Sichtfeld und mit einer Empfängeroptik zum Empfangen von Licht aus dem Sichtfeld ausgebildet ist, wobei die Senderoptik und/oder die Empfängeroptik ein Lichttransmissionselement gemäß der vorliegenden Erfindung aufweist bzw. aufweisen, insbesondere nach Art einer optischen Aktoreinheit oder nach Art einer optischen Empfangseinheit.

Schließlich ist Gegenstand der vorliegenden Erfindung auch eine Arbeitsvorrichtung, welche mit einem Lidar-System gemäß der vorliegenden Erfindung ausgebildet ist.

Die Arbeitsvorrichtung kann insbesondere ein Fahrzeug sein.

### Kurzbeschreibung der Figuren

Unter Bezugnahme auf die beigefügten Figuren werden Ausführungsformen der Erfindung im Detail beschrieben.
- Figur 1: ist eine schematische Seitenansicht einer ersten Ausführungsform des erfindungsgemäßen Lichttransmissionselements.
- Figur 2: ist eine schematische Seitenansicht der Ausführungsform des erfindungsgemäßen Lichttransmissionselements aus Figur 1 im Zusammenhang mit einer optischen Anordnung.
- Figuren 3 und 4: zeigen schematische Seitenansichten anderer Ausführungsformen des erfindungsgemäßen Lichttransmissionselements in jeweiligen Anwendungen.

### Bevorzugte Ausführungsformen der Erfindung

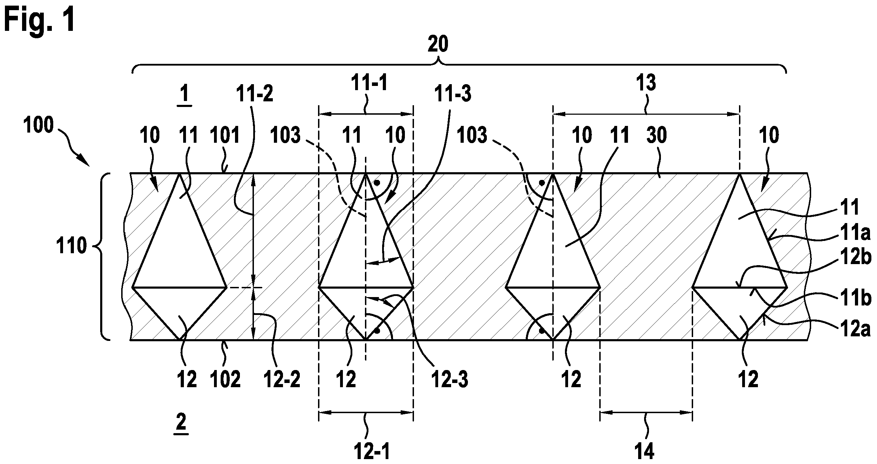

Nachfolgend werden unter Bezugnahme auf die Figuren 1 bis 4 Ausführungsbeispiele der Erfindung und der technische Hintergrund im Detail beschrieben. Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben.

Die dargestellten Merkmale und weiteren Eigenschaften können in beliebiger Form voneinander isoliert und beliebig miteinander kombiniert werden, ohne den Kern der Erfindung zu verlassen.

Figur 1 ist eine schematische Seitenansicht einer ersten Ausführungsform des erfindungsgemäßen Lichttransmissionselements 100.

Das erfindungsgemäß ausgestaltete Lichttransmissionselement 100 gemäß Figur 1 besteht aus einer Anordnung 20 einer Mehrzahl optischer Elemente 10 die nach Art einer Doppelpyramide oder eines Doppelkonus ausgebildet sind und somit aus einem ersten Teilelement 11 mit Basis 11b und Mantel 11a und einem zweiten Teilelement 12 mit Basis 12b und Mantel 12a bestehen, welche identische Basen 11b und 12b aufweisen und welche mit ihren Basen 11b, 12b einander zugewandt und insbesondere miteinander verbunden sind.

Die optischen Elemente 10 liegen in einer Ebene, bilden quasi eine Schicht 110 und unterteilen den gesamten Raum in einen ersten oder oberen Halbraum oder eine erste oder obere Seite 1 und in einen zweiten oder unteren Halbraum oder eine zweite oder untere Seite 2. Dabei ist eine erste oder obere Seite 101 der Schicht 110 dem ersten Halbraum oder der ersten Seite 1 zugewandt, wogegen eine zweite oder untere Seite 102 dem zweiten Halbraum oder der zweiten Seite 2 des Raums zugewandt ist.

Die Basis 11b des ersten Teilelements 11 weist eine Breite oder einen Durchmesser 11-1 auf. Die Basis 12b des zweiten Teilelements 12 weist eine Breite oder einen Durchmesser 12-1 auf.

Das erste Teilelement 11 und das zweite Teilelement 12 verjüngen sich von der jeweiligen Basis 11b, 12b ausgehend und laufen spitz zu. In Richtung seiner Verjüngung besitzt das erste Teilelement 11 eine Länge 11-2. In Richtung seiner Verjüngung besitzt das zweite Teilelement 12 eine Länge 12-2. Die Verjüngung kann entweder beschrieben werden durch das Verhältnis der Breite 11-1, 12-1 oder des Durchmessers der jeweiligen Basis 11b, 12b zur Länge 11-2, 12-2 in Richtung der Verjüngung. Alternativ dazu kann der Öffnungswinkel 11-3 bzw. 12-3 an der der jeweiligen Basis 11 b, 12 b gegenüberliegenden Spitze angegeben werden, und zwar in Bezug auf das Lot 103 auf die erste oder obere Seite 101 und/oder auf die zweite oder untere Seite 102.

Bei der in Figur 1 dargestellten Ausführungsform des Lichttransmissionselements 100 sind die optischen Elemente 10 in einen Träger 30 eingebettet. Durch diese Einbettung 30 werden die optischen Elemente zueinander mechanisch in ihrer Lage und Orientierung stabilisiert. Die Einbettung in einen Träger 30 ist insgesamt nicht zwingend. Die Einbettung in das Trägermaterial 30 kann auch nur teilweise erfolgen, also nicht raumfüllend, zum Beispiel als dünnste Materialschicht oder als dünne Fäden zwischen den optischen Elementen 10. Die Einbettung in einen Träger 30 kann auch ganz entfallen, zum Beispiel dann, wenn eine Fixierung im unteren Bereich der zweiten optischen Teilelemente 12, zum Beispiel an deren Spitze möglich ist.

Bei der Ausführungsform gemäß Figur 1 besitzen die ersten und zweiten Teilelemente 11 und 12 eines jeweiligen optischen Elements 10 miteinander fluchtende Figurenachsen, welche mit dem lokalen Lot 103 auf den ersten und zweiten Seiten 101 und 102 der Schicht 110 des Lichttransmissionselements 100 zusammenfallen. Diese Anordnung ist jedoch nicht zwingend. Es können auch andere Orientierungen der Figurenachsen zueinander und in Relation zum Lot 103, auch in lokaler Hinsicht, je nach Anwendung gewählt werden.

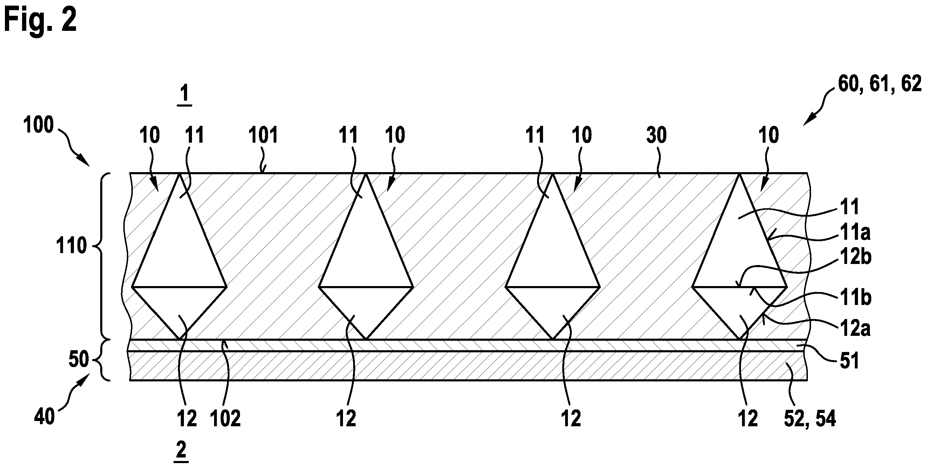

Figur 2 ist eine schematische Seitenansicht der Ausführungsform des erfindungsgemäßen Lichttransmissionselements 100 aus Figur 1 im Zusammenhang mit einer erfindungsgemäßen Einheit 50 als Teil einer optischen Anordnung 60.

Bei der Ausführungsform gemäß Figur 2 ist die Anordnung des Lichttransmissionselements 100 aus Figur 1, auf eine optische Einheit 50 optisch vorgeschaltet, aufgebracht. Die optische Einheit 50 besteht aus einer auf der Unterseite 102 der Schicht 110 folgenden Filterschicht 51. An diese kann sich eine Sensorschicht 52 anschließen. Bei einer derartigen Anordnung wird aus dem ersten Halbraum 1 einfallendes Licht durch das Lichttransmissionselement 100 transmittiert, wobei, wie dies im Detail unten beschrieben werden wird, ein Einfallswinkel eines jeweiligen Lichtstrahls zum lokalen Lot 103 hin verringert angepasst wird. Durch die Anpassung des Einfallswinkels können die Akzeptanzbereiche der optisch nachgeschalteten Filterschicht 51 und/oder der Sensorschicht 52 besser genutzt werden. Im Umkehrschluss ergeben sich eine geringere oder gar verschwindende Verschiebung des Transmissionsfensters der Filterschicht 51 bzw. des Detektionsfensters der Sensorschicht 52.

Zusätzlich fungieren die Filterschicht 51 und die Sensorschicht 52 als - gegebenenfalls alternativer oder zusätzlicher - Träger 40 für die einzelnen optischen Elemente 10 des Lichttransmissionselements 100.

Die Sensorschicht 52 kann ersetzt sein durch eine Emitterschicht 54, um so eine optische Aktoreinheit zu bilden, bei welcher die Emitterschicht 54 Licht aussendet, deren Emissionswinkelbereich nach Durchlaufen des Lichttransmissionselements 100 aufgeweitet ist.

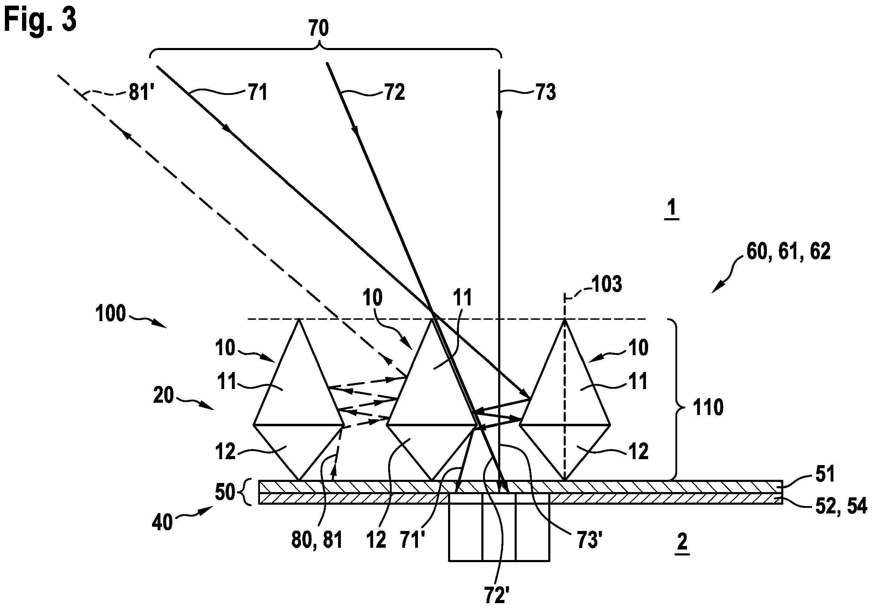

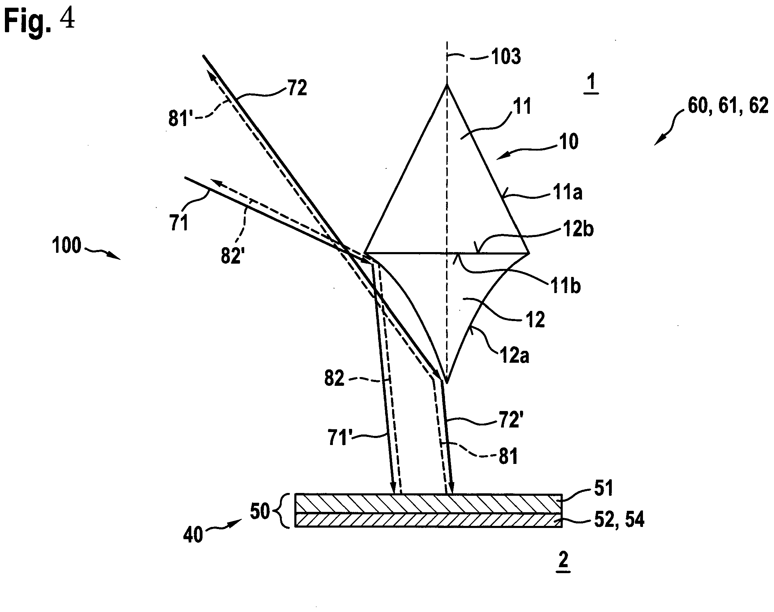

Die Figuren 3 und 4 zeigen schematische Seitenansichten anderer Ausführungsformen des erfindungsgemäßen Lichttransmissionselements 100 in jeweiligen Anwendungen der optischen Einheiten 50 und der entsprechenden optischen Anordnungen 60.

Die Ausgestaltungsform des erfindungsgemäßen Lichttransmissionselements 100, welches in Figur 3 dargestellt ist, beschreibt ebenfalls die Anwendung im Zusammenhang mit einer optischen Anordnung 60, die als optische Empfangseinheit 61, nämlich bei Verwendung einer Sensorschicht 52, oder als optische Aktoreinheit 62 ausgebildet sein kann, nämlich bei Verwendung einer Emitterschicht 54 beim Aufbau der optischen Einheit 50.

Dargestellt sind einzelne von extern einfallende Lichtstrahlen 71, 72 und 73 des externen einfallenden Lichts 70, und zwar in Abhängigkeit vom tatsächlichen Einfallswinkel im Vergleich zur Orientierung der optischen Elemente 10 und des Lotes 103 zur Schicht 110, die von extern einfallende Lichtstrahlen 71, 72 und 73 unterschiedlich mit der Anordnung 20 der optischen Elemente 10.

Der vergleichsweise flach einfallende erste Strahl 71 wechselwirkt mit direkt benachbarten optischen Elementen 10 in Form einer Mehrfachreflexion, wobei er infolge als transmittierter Strahl im Vergleich zum Lot 103 mit geringerem Einfallswinkel auf die optische Einheit 50 und insbesondere auf die Filterschicht 51 auftrifft.

Der zweite extern einlaufende Lichtstrahls 72 fällt mit einem Einfallswinkel im Verhältnis zum Lot 103 ein, welcher dem Öffnungswinkel des oberen Teilelements 11 des optischen Elements 10 entspricht. In dem hier gezeigten Fall trifft der Strahl 72 keines der optischen Elemente 10 und gelangt direkt ohne Wechselwirkung auf die Filterschicht 51 der optischen Einheit 50.

Der von extern einlaufende Strahl 73 läuft parallel zum Lot 103 und direkt zwischen zwei direkt benachbarten optischen Elementen 10 und trifft daher auch ohne Wechselwirkung auf der Filterschicht 51 auf.

Im Betrieb der optischen Einheit 50 mit Emitterschicht 54, also bei Ausgestaltung der optischen Anordnung 60 als optische Aktoreinheit 62, zu Beispiel als Emitter, wird ein aus einer internen Emission stammender Lichtstrahl 81 imitiert, trifft zunächst auf das zweite Teilelement 12 eines optischen Elements 10 und gelangt dann nach einer Mehrfachreflexion zwischen zwei direkt benachbarten optischen Elementen 10 als nach extern transmittierter Strahl 81' in den ersten Halbraum 1 zurück.

Bei der Ausführungsform gemäß Figur 4 besitzen die zweiten Teilelemente 12 der optischen Elemente 10 einen Mantel 12a, welcher konkav ausgebildet ist. Auf diese Weise kann eine verbesserte Winkelanpassung von extern einfallende Strahlen 71 und 72 in transmittierte Strahlen 71', 72' oder von nach interner Emission einlaufenden Strahlen 81, 82 in nach extern auslaufende Strahlen 81', 82' erreicht werden.,

Figur 2 ist eine schematische Seitenansicht der Ausführungsform des erfindungsgemäßen Lichttransmissionselements 100 aus Figur 1 im Zusammenhang mit einer erfindungsgemäßen Einheit 50 als Teil einer optischen Anordnung 60.

Diese und weitere Merkmale und Eigenschaften der vorliegenden Erfindung werden an Hand der folgenden Darlegungen weiter erläutert:
Die vorliegende Erfindung betrifft insbesondere auch eine optische Struktur zur Minimierung des Auftreffwinkels einfallender Lichtstrahlen bei einem erweiterten Winkelakzeptanzbereich.

Mottenaugenstrukturen zur Erhöhung der optischen Absorption an Oberflächen, z.B. bei Black-Silicon-Detektoren oder bei Antireflexbeschichtungen, als solche sind bekannt und finden Einsatz als vergleichsweise kostenintensive optische Wellenlängenfilter für größere Akzeptanzwinkel oder als kostengünstige optische Wellenlängenfilter für kleine Akzeptanzwinkel, besondere mit einer Verbreiterung und Verschiebung des Transmissionsfensters bei größeren Winkeln.

Eine Zielsetzung der vorliegenden Erfindung ist die Schaffung einer Minimierung des Auftreffwinkels einfallender Lichtstrahlen bei einem großen Winkelakzeptanzbereich mit einfachen Mitteln.

Als Vorteile der vorliegenden Erfindung stellen sich ein
- die Verwendung kostengünstiger optischer Wellenlängenfilter bei großen Einfallswinkeln mit einer höchstens geringeren unerwünschten Erweiterung und Verschiebung des Transmissionsfensters über einen durch die Struktur reduzierten Einfallswinkel,
- ein höchstens geringfügiger Leistungsverlust bei ungünstigen Eintreffwinkeln und Eintreffpositionen auf der Struktur mit weitaus selteneren ungünstigen Fällen im Vergleich zur Wahrscheinlichkeit günstiger Fälle, in denen das Funktionsprinzip greift,
- die Realisierbarkeit als größere Makrostruktur oder als miniaturisierte Mikrostruktur, wobei weitere Miniaturisierungen lediglich begrenzt sind durch Beugungseffekte ab ca. der dreifachen Wellenlänge, mit einer sich ergebenden Skalierbarkeit der Anordnung, und
- die Möglichkeit der Zusammensetzung von Teilbildern auf einem Sensor unter Beibehaltung einer bildgebenden Winkelübersetzung.

Elementstrukturen aus dem Stand der Technik, der sich an natürlichen Mottenaugen als Absorptionsstrukturen orientiert und in verschiedenen Formen und Größen für viele technische Anwendungen verwendet wird, werden um eine zusätzliche und untere Elementhälfte erweitert, so dass sich insbesondere senkrecht zur Oberfläche der optisch aktiven Schicht für jedes Element die Struktur eines Doppelkonus oder einer Doppelpyramide ergibt, und zwar jeweils mit einer Konusachse oder Pyramidenachse senkrecht zur Oberfläche der optisch aktiven Schicht.

Sowohl die obere als auch die untere Elementhälfte 11, 12 können für die gesamte Struktur als reflektierende oder mit reflektierender Oberfläche ausgestaltet werden. Im Idealfall ergibt sich eine dreidimensionale Struktur aus vielen Einzelelementen 10, die eine zweidimensionale Oberfläche - vorzugsweise reflektierend - überdecken.

Die obere, geneigte Elementhälfte 11 dient dabei weiterhin zum Einfangen einer maximalen Lichtintensität, wobei durch die mehrfachen Spiegelungen der Winkel eines einfallenden Lichtstrahls aus einem zum Lot großen Winkel immer größer wird.

Die zweite oder untere Elementhälfte 12 dient der Winkelverkleinerung am Ende der Reflexionskette durch eine zur oberen Elementhälfte 11 stärkere und vorzeichengedrehte Steigung zum Lot 103.

Der optische Filter 51 und der Sensor 52 werden für ein bildgebendes Verfahren unmittelbar am Ende der unteren Elementhälfte 12 angebracht, so dass die aus größeren Winkelbereichen eintreffenden Strahlen von denen, die nicht abgelenkt auf den Filter 51 auftreffen, ohne Überlapp getrennt werden.

Eine getrennte Verarbeitung von Sensorteilbildern erlaubt eine digitale Zusammensetzung eines Gesamtbildes, z.B. zur Anwendung einer optischen Sensorik, wie bei einem LiDAR-System.

Die nachfolgend beschriebenen Optimierungsparameter werden vorzugsweise darauf ausgelegt, dass über einen maximalen Winkelbereich keine Rückreflektion zur externen Lichtquelle auftritt, sondern eine Ablenkung nach innen zur Detektorseite erfolgt.

In Abhängigkeit von der jeweiligen Anwendung können folgende Parameter optimiert werden:
- Horizontaler Abstand 13, 14 direkt benachbarter Strukturelemente 10
- Vertikale Längen 11-2, 12-2 und das Längenverhältnis obere zu untere Elementhälfte 11, 12
- Neigungswinkel 11-3 der oberen Elementhälfte 11
- Neigungswinkel 12-3 der unteren Elementhälfte 12
- Formung der unteren Elementhälfte 12

Die Einzelelemente 10 können entweder auf einem Filter 51 und/oder Sensor 52 aufgebracht und dadurch fixiert oder alternativ durch eine weitere Ebene 30, die die Elemente horizontal verbindet und eine sehr hohe Transmission besitzt, zusammengehalten werden, zum Beispiel auch durch ein transparentes einbettendes Material 30.

Figur 3 erläutert schematisch das zweidimensionale Funktionsprinzip am Beispiel einer Ausführungsform der erfindungsgemäßen optisch wirksamen Schicht 110, aufgefasst als Lichttransmissionselement 100, anhand dreier aus dem oberen Halbraum 1 einfallender Lichtstrahlen 71, 72, 73 mit unterschiedlichem Einfallswinkel.

Figur 4 erläutert schematisch eine andere Ausführungsform der erfindungsgemäßen optisch wirksamen Schicht 110, aufgefasst als erfindungsgemäßes Lichttransmissionselement 100, bei welcher von strikt planaren Raumgrenzflächen oder Mantelflächen 12a beim zweiten oder unteren Teilelement 12 abgewichen wird und stattdessen konkave Grenzflächen oder Mantelflächen 12a mit einem kontinuierlich variierenden Grenzflächenwinkel zum Einsatz kommen.

Die Größe der optischen Elemente 10 kann makroskopisch im Bereich von Millimetern oder Zentimetern liegen, und zwar mit einer mikroskopischen Struktur im Bereich von Nanometern oder Mikrometern, zum Beispiel bei einem Rundum-Aufsatz vor einem Lidarabdeckfenster. Denkbar ist ein kleines Overlay vor dem eigentlichen Filter in Detektornähe. Als mögliche Herstellungsverfahren kommen zum Beispiel Spritzgießen, MEMS und einen Nanofertigung in Frage.

## Patentansprüche

1. Lichttransmissionselement (100) für eine optische Einheit (50) zur Transmission und dabei Winkelanpassung transmittierten Lichts,
- welches nach Art einer Schicht (110) angeordnet eine Abfolge (20) einer Mehrzahl optischer Elemente (10) aufweist,
- bei welchem die Schicht (110) eine erste Seite (101) und eine zweite Seite (102) bildet, die voneinander abgewandt sind, **dadurch gekennzeichnet dass**,
- ein jeweiliges optisches Element (10) ein Paar sich jeweils von einer geometrisch im Wesentlichen gleichen Basis (11b, 12b) verjüngend erstreckende Teilelemente (11, 12) aufweist, welche mit ihren Basen (11b, 12b) einander zugewandt sind und sich entlang ihrer Verjüngung mit unterschiedlicher Länge erstrecken, und
- die optischen Elemente (10) so ausgerichtet sind, dass Teilelemente (11, 12) mit größerer Länge der ersten Seite (101) und Teilelemente (12, 11) mit geringerer Länge der zweiten Seite (102) zugewandt sind.

2. Lichttransmissionselement (100) nach Anspruch 1, bei welchem:
- die Schicht (110) mit der Abfolge (20) optischer Elemente (10) nach Art einer Monoschicht optischer Elemente (10) ausgebildet ist und/oder
- die Schicht (110) in einer Fläche oder Ebene und insbesondere planar ausgebildet ist.

3. Lichttransmissionselement (100) nach einem der vorangehenden Ansprüche, bei welchem:
- die optischen Elemente (10) und insbesondere die Teilelemente (11, 12) unter sich geometrisch und/oder materiell identisch zueinander ausgebildet sind,
- die optischen Elemente (10) nach Art eines Doppelkonus und/oder einer Doppelpyramide ausgebildet sind,
- die Teilelemente (11, 12) jeweils als, insbesondere senkrechter, Konus oder Konusstumpf und/oder als, insbesondere senkrechte, Pyramide oder Pyramidenstumpf ausgebildet sind und/oder
- die optischen Elemente (10) einteilig oder materialeinstückig ausgebildet sind.

4. Lichttransmissionselement (100) nach einem der vorangehenden Ansprüche,
bei welchem die optischen Elemente (10) und insbesondere die Teilelemente (11, 12) einen Mantel (11a, 12a) aufweisen, dessen Fläche reflektierend ausgebildet ist, insbesondere über eine reflektierende Schicht oder Beschichtung.

5. Lichttransmissionselement (100) nach einem der vorangehenden Ansprüche,
bei welchem die optischen Elemente (10) und insbesondere die Teilelemente (11, 12) zumindest lokal oder insgesamt zueinander gleich, insbesondere lokal oder insgesamt senkrecht zur ersten Seite (101) und/oder zur zweiten Seite (102), und/oder zueinander parallel orientiert ausgerichtet sind, insbesondere in Relation zu ihren Körperachsen.

6. Lichttransmissionselement (100) nach einem der vorangehenden Ansprüche, bei welchem
- die optischen Elemente (10) in der Schicht (110) nach Art eines, insbesondere senkrechten, Gitters angeordnet sind,
- die optischen Elemente (10) in der Schicht (110) nach Art eines, insbesondere senkrechten, Gitters sowie eines dazu dualen Gitters, insbesondere nach Art einer dichtesten Packung, angeordnet sind und/oder
- die optischen Elemente (10) zweidimensional angeordnet sind.

7. Optische Empfangseinheit (61), insbesondere Filter und/oder Sensor, welche ein Lichttransmissionselement (100) nach einem der Ansprüche 1 bis 6 aufweist,
bei welcher insbesondere ein Lichteingangsbereich gebildet wird von der ersten Seite (101) des Lichttransmissionselements (100) und/oder ein Lichtausgangsbereich gebildet wird von der zweiten Seite (102) des Lichttransmissionselements (100).

8. Optische Aktoreinheit (62), insbesondere Emitter für elektromagnetische Strahlung, welche ein Lichttransmissionselement (100) nach einem der Ansprüche 1 bis 6 aufweist,
bei welcher insbesondere ein Lichteingangsbereich gebildet wird von der zweiten Seite (102) des Lichttransmissionselements (100) und/oder ein Lichtausgangsbereich gebildet wird von der ersten Seite (101) des Lichttransmissionselements (100).

9. LiDAR-System mit einer Senderoptik zum Aussenden von Licht in ein Sichtfeld und mit einer Empfängeroptik zum Empfangen von Licht aus dem Sichtfeld, bei welchem die Senderoptik und/oder die Empfängeroptik ein Lichttransmissionselement (100) nach einem der Ansprüche 1 bis 6 aufweisen, insbesondere nach Art einer optischen Aktoreinheit nach Anspruch 8 bzw. nach Art einer optischen Empfangseinheit nach Anspruch 7.

10. Arbeitsvorrichtung und/oder Fahrzeug, welche bzw. welches mit einem LiDAR-System nach Anspruch 9 ausgebildet ist bzw. sind.

## Claims

1. Light transmission element (100) for an optical unit (50) for the transmission and at the same time angle adaptation of transmitted light,
- which has, arranged in the manner of a layer (110), a sequence (20) of a plurality of optical elements (10),
- in which the layer (110) forms a first side (101) and a second side (102), which face away from one another, **characterized in that**
- a respective optical element (10) has a pair of partial elements (11, 12), which extend with a taper in each case from a geometrically substantially identical base (11b, 12b), face one another by their bases (11b, 12b) and extend along their tapers with different lengths, and
- the optical elements (10) are aligned such that partial elements (11, 12) having a greater length face the first side (101) and partial elements (12, 11) having a shorter length face the second side (102).

2. Light transmission element (100) according to Claim 1, in which:
- the layer (110) with the sequence (20) of optical elements (10) is embodied in the manner of a monolayer of optical elements (10), and/or
- the layer (110) is formed in a surface or plane and in particular in a planar manner.

3. Light transmission element (100) according to either of the preceding claims, in which:
- the optical elements (10) and in particular the partial elements (11, 12) are formed geometrically and/or materially identically with respect to one another,
- the optical elements (10) are formed in the manner of a double cone and/or a double pyramid,
- the partial elements (11, 12) are formed in each case as an, in particular perpendicular, cone or truncated cone and/or as an, in particular perpendicular, pyramid or truncated pyramid, and/or
- the optical elements (10) are formed in one piece or materially in one piece.

4. Light transmission element (100) according to one of the preceding claims,
in which the optical elements (10) and in particular the partial elements (11, 12) have a lateral surface (11a, 12a) which is embodied so as to be reflective, in particular by way of a reflective layer or coating.

5. Light transmission element (100) according to one of the preceding claims,
in which the optical elements (10) and in particular the partial elements (11, 12) are aligned at least locally or overall identically to one another, in particular oriented locally or overall perpendicularly to the first side (101) and/or to the second side (102), and/or parallel with respect to one another, in particular in relation to their body axes.

6. Light transmission element (100) according to one of the preceding claims, in which
- the optical elements (10) are arranged in the layer (110) in the manner of an, in particular perpendicular, grid,
- the optical elements (10) are arranged in the layer (110) in the manner of an, in particular perpendicular, grid and of a dual grid with respect thereto, in particular in the manner of a tightest packing, and/or
- the optical elements (10) are arranged two-dimensionally.

7. Optical receiving unit (61), in particular filter and/or sensor, having a light transmission element (100) according to one of Claims 1 to 6,
in which in particular a light entry region is formed by the first side (101) of the light transmission element (100) and/or a light exit region is formed by the second side (102) of the light transmission element (100).

8. Optical actuator unit (62), in particular emitter for electromagnetic radiation, having a light transmission element (100) according to one of Claims 1 to 6,
in which in particular a light entry region is formed by the second side (102) of the light transmission element (100) and/or a light exit region is formed by the first side (101) of the light transmission element (100).

9. LIDAR system having a transmission optical unit for emitting light into a field of view and having a receiver optical unit for receiving light from the field of view, in which the transmission optical unit and/or the receiving optical unit have a light transmission element (100) according to one of Claims 1 to 6, in particular in the manner of an optical actuator unit according to Claim 8 or in the manner of an optical receiving unit according to Claim 7.

10. Work apparatus and/or vehicle, which is embodied with a LIDAR system according to Claim 9.

## Revendications

1. Élément de transmission de lumière (100) destiné à une unité optique (50) pour la transmission et le réglage angulaire de la lumière transmise,
- lequel élément comporte une succession (20) d'une pluralité d'éléments optiques (10) disposés sous la forme d'une couche (110) et
- dans lequel la couche (110) forme une première face (101) et une deuxième face (102) qui sont dirigées à l'opposé l'une de l'autre, **caractérisé en ce que**
- un élément optique respectif (10) comporte une paire de sous-éléments (11, 12) qui s'étendent en s'amincissant chacun à partir d'une base (11b, 12b) sensiblement identique du point de vue géométrique et dont les bases (11b, 12b) sont dirigées l'une vers l'autre et s'étendent le long de leur amincissement avec différentes longueurs, et
- les éléments optiques (10) sont orientés de telle sorte que des sous-éléments (11, 12) de plus grande longueur soient dirigés vers la première face (101) et les sous-éléments (12, 11) de plus petite longueur soient dirigés vers la deuxième face (102).

2. Élément de transmission de lumière (100) selon la revendication 1, dans lequel :
- la couche (110) pourvue de la succession (20) d'éléments optiques (10) est conçue à la manière d'une monocouche d'éléments optiques (10) et/ou
- la couche (110) est conçue comme une surface ou un plan et notamment sous forme planaire.

3. Élément de transmission de lumière (100) selon l'une des revendications précédentes, dans lequel :
- les éléments optiques (10) et notamment les sous-éléments (11, 12) sont conçus pour être géométriquement et/ou matériellement identiques les uns aux autres,
- les éléments optiques (10) sont conçus à la manière d'un double cône et/ou d'une double pyramide,
- les sous-éléments (11, 12) sont conçus chacun comme un cône ou un cône tronqué, notamment vertical, et/ou comme une pyramide ou une pyramide tronquée, notamment verticale, et/ou
- les éléments optiques (10) sont conçus d'une seule pièce ou d'un seul matériau.

4. Élément de transmission de lumière (100) selon l'une des revendications précédentes, dans lequel les éléments optiques (10) et notamment les sous-éléments (11, 12) comportent une enveloppe (11a, 12a) dont la surface est conçue pour être réfléchissante, notamment par le biais d'une couche réfléchissante ou d'un revêtement réfléchissant.

5. Élément de transmission de lumière (100) selon l'une des revendications précédentes, dans lequel les éléments optiques (10) et notamment les sous-éléments (11, 12) sont au moins localement ou totalement identiques les uns aux autres, notamment localement ou totalement perpendiculaires à la première face (101) et/ou à la deuxième face (102), et/ou orientés parallèlement les uns aux autres, notamment par rapport à leurs axes de corps.

6. Élément de transmission de lumière (100) selon l'une des revendications précédentes, dans lequel
- les éléments optiques (10) sont disposés dans la couche (110) à la manière d'un réseau, notamment vertical,
- les éléments optiques (10) sont disposés dans la couche (110) à la manière d'un réseau, notamment vertical, et d'un réseau réciproque à celui-ci, notamment à la manière d'un empilement très serré, et/ou
- les éléments optiques (10) sont disposés en deux dimensions.

7. Unité de réception optique (61), notamment filtre et/ou capteur, qui comporte un élément de transmission de lumière (100) selon l'une des revendications 1 à 6, dans lequel notamment une zone d'entrée de lumière est formée par la première face (101) de l'élément de transmission de lumière (100) et/ou une zone de sortie de lumière est formée par la deuxième face (102) de l'élément de transmission de lumière (100).

8. Unité d'actionnement optique (62), notamment émetteur de rayonnement électromagnétique, qui comporte un élément de transmission de lumière (100) selon l'une des revendications 1 à 6, unité d'actionnement optique dans laquelle notamment une zone d'entrée de lumière est formée par la deuxième face (102) de l'élément de transmission de lumière (100) et/ou une zone de sortie de lumière est formée par la première face (101) de l'élément de transmission de lumière (100).

9. Système LiDAR comprenant une optique d'émission destinée à émettre de la lumière dans un champ de vision et une optique de réception destinée à recevoir de la lumière du champ de vision, dans lequel l'optique d'émission et/ou l'optique de réception comportent un élément de transmission de lumière (100) selon l'une des revendications 1 à 6, en particulier à la manière d'une unité d'actionnement optique selon la revendication 8 ou à la manière d'une unité de réception optique selon la revendication 7.

10. Dispositif de travail et/ou véhicule qui sont conçus avec un système LiDAR selon la revendication 9.
